# FASCICULE DE BREVET EUROPEEN

(11) **EP 0 638 348 B1**
(45) Date de publication et mention de la délivrance du brevet: **28.08.1996**
(21) Numéro de dépôt: 94401740.9
(22) Date de dépôt: 28.07.1994
(51) Int. Cl.: B01D 35/30, B01D 27/06, B01D 27/08, B01D 35/14

(54) **Perfectionnements apportés aux boîtiers pour filtres à liquide**
Verbesserungen bei oder in Bezug auf Flüssigkeitsfiltergehäuse
Improvements in or relating to liquid filter housings

(30) Priorité: 02.08.1993 FR 9309501; 18.11.1993 FR 9313780
(43) Date de publication de la demande: 15.02.1995
(73) Titulaire: FILTRAUTO, F-78180 Montigny le Bretonneux (FR)
(72) Inventeur: L'Alloret, Pierre, F-95000 Cergy (FR); Legrand, Guy, F-78990 Elancourt (FR); Blazek, Bernard, F-77184 Emerainville (FR); Caunet, Guy, F-94400 Vitry Sur Seine (FR); Bleslu, Camille, F-12330 Marcillac (FR)
(74) Mandataire: Burbaud, Eric

(56) Documents cités:
- EP-A- 0 330 569
- EP-A- 0 528 528
- GB-A- 789 783
- GB-A- 1 450 038
- US-A- 4 215 790

## Description

L'invention est relative aux boîtiers destinés à recevoir des cartouches filtrantes pour liquide, de façon amovible, en vue de leur remplacement après usure ou colmatage, lesdits boîtiers comprenant à cet effet une cuve cylindrique et un couvercle propre à être monté sur cette cuve et à être démonté de façon à livrer passage aux cartouches filtrantes, les fonds desdites cuves, évidés par des orifices d'admission et d'évacuation du liquide, étant agencés de façon telle que ces cuves puissent être montées de façon réversible sur des supports appropriés par vissage et dévissage, commandés en exerçant des couples sur les couvercles.

Le document EP-A-0 330 569 décrit un filtre vissable à capot cannelé avec une coiffe dont la jupe a des empruntes coopérantes avec les cannelures du capot.

Avec les boîtiers de ce genre, il est intéressant de pouvoir procéder de l'une ou l'autre des deux façons suivantes :
- lorsque le couvercle est monté sur la cuve, sa solidarisation angulaire avec cette cuve doit être solidement réalisée pour que les couples de vissage et dévissage alors exercés sur le couvercle, dans l'un ou l'autre des deux sens possibles, généralement à l'aide d'une clé coopérant avec un bossage ou creux à six pans constituant le centre du couvercle, soient intégralement transmis à la cuve et ce sans qu'il y ait risque de démontage du couvercle,
- ce démontage du couvercle doit pouvoir être obtenu facilement par une commande à la main, et sans que cette commande ait de répercussion sur le montage vissé de la cuve sur son support.

Dans les modes de réalisation connus de ces boîtiers, les deux fonctions ci-dessus ne sont pas nettement séparées ou l'obtention indépendante de ces deux fonctions exige le recours à des moyens spéciaux assurant notamment le blocage angulaire entre la cuve et son support en fin de vissage.

L'invention a pour but, surtout, de rendre possibles automatiquement les deux fonctions ci-dessus décrites à l'aide de moyens particulièrement simples, robustes et faciles à mettre en oeuvre.

A cet effet, les boîtiers du genre en question selon l'invention sont essentiellement caractérisés :
- en ce que le bord libre est prolongé par un rebord discontinu faisant saillie vers l'extérieur et comportant au moins deux tronçons,
- en ce que le couvercle présente, du côté de la cuve, au moins un ergot qui peut coopérer angulairement avec le rebord de la cuve pour empêcher une rotation du couvercle par rapport à la cuve, et une paroi cylindrique qui peut s'emboîter avec étanchéité dans la cuve, le couvercle comportant en outre, à l'opposé de la cuve, au moins deux crochets qui présentent des becs dirigés radialement vers l'extérieur et qui sont déplaçables élastiquement radialement vers l'intérieur,
- en ce que ledit boîtier comporte en outre une bague de verrouillage présentant d'une part une couronne qui recouvre partiellement le couvercle et d'autre part une jupe sensiblement cylindrique qui peut s'engager à l'extérieur du bord libre de la cuve, ladite jupe comportant des bossages internes propres à pénétrer axialement entre les tronçons du rebord de la cuve puis à s'engager sous ces tronçons par rotation de la bague par rapport à la cuve aux fins de verrouillage axial du couvercle sur la cuve,
- en ce que la couronne de la bague comporte un bord interne sur lequel sont clipsés les crochets du couvercle en permettant un déplacement angulaire de la bague par rapport au couvercle, les becs des crochets recouvrant localement la couronne de la bague pour empêcher une séparation axiale de la bague et du couvercle,
- et en ce que ledit boîtier comporte des moyens d'indexation qui définissent deux positions angulaires indexées de la bague par rapport au couvercle, savoir une position verrouillée et une position déverrouillée, la position déverrouillée permettant la pénétration axiale simultanée des bossages internes de la jupe de la bague et de l'ergot du couvercle entre les tronçons du rebord de la cuve, et les bossages internes étant engagés sous les tronçons du rebord de la cuve dans la position verrouillée, la bague et le couvercle étant maintenus de façon réversible par les moyens d'indexation dans leurs positions indexées.

Grâce à ces dispositions, l'utilisateur qui manipule la bague de verrouillage peut être certain qu'elle est soit dans la position verrouillée, soit dans la position déverrouillée. De plus, la bague de verrouillage ne risque pas de passer accidentellement d'une de ces positions indexées à l'autre.

Dans des modes de réalisations préférés, on a recours en outre à l'une et/ou à l'autre des dispositions suivantes :
- le bord interne de la couronne de la bague présente au moins une échancrure en arc de cercle, qui est concentrique à la jupe, et dans laquelle est clipsé un des crochets, cette échancrure s'étendant circonférentiellement entre deux butées sensiblement radiales qui coopèrent avec ledit crochet pour limiter le déplacement angulaire de la bague par rapport au couvercle, ladite échancrure comportant en outre deux encoches près des butées pour recevoir de façon réversible le crochet clipsé dans ladite échancrure, en définissant ainsi les deux positions angulaires indexées de la bague par rapport au couvercle, ledit crochet et lesdites encoches constituant lesdits moyens d'indexation ;
- le rebord discontinu de la cuve présente un rabat qui s'étend axialement le long de ladite cuve, ce qui renforce ledit rebord ;
- le rebord discontinu est renforcé par des poinçonnages réalisés sur le bord libre de la cuve ;
- les bossages internes de la jupe de la bague sont constitués par des crevés formant chacun un redan vers l'intérieur de la jupe, chaque crevé étant relié à la jupe par deux lignes axiales, ce qui permet d'obtenir des bossages très résistants ;
- la bague a un diamètre assez faible pour être tenue à la main, et les crevés constituent des moyens de préhension propres à coopérer avec les doigts de la main pour faire tourner la bague par rapport au couvercle ;
- la couronne de la bague s'appuie sur le couvercle dans une zone annulaire proche de la jupe, ce qui limite les déformations de ladite couronne dues à son appui sur le couvercle ;
- le bord interne de la couronne de la bague est rehaussé par rapport à la zone annulaire de contact entre la bague et le couvercle, et les crochets du couvercle s'étendent sensiblement axialement depuis le niveau de ladite zone annulaire de contact jusqu'au niveau dudit bord interne, ce qui permet une flexion élastique des crochets dans une direction radiale ;
- chaque encoche de l'échancrure de la bague est séparée du reste de l'échancrure par une découpe biaise formant un angle obtus avec ladite encoche, ce qui facilite le passage du crochet clipsé dans l'échancrure ;
- le couvercle présente un bord périphérique découpé de façon à ne pas interférer avec les bossages internes de la jupe de la bague, lors de l'emboîtement axial de la bague sur le couvercle ;
- le boîtier comporte des moyens de blocage pour bloquer la bague dans sa position verrouillée, et des moyens de déblocage actionnables pour neutraliser temporairement l'action des moyens de blocage ;
- les moyens de blocage sont constitués par un organe de blocage mobile entre une position de blocage et une position de déblocage, ledit organe de blocage étant sollicité par des moyens élastiques vers sa position de blocage, les moyens de déblocage étant constitués par un organe d'actionnement qui peut déplacer l'organe de blocage vers sa position de déblocage, contre l'action des moyens élastiques, le boîtier comportant en outre un élément d'arrêt qui peut collaborer avec l'organe de blocage pour bloquer la bague dans sa position de verrouillage, l'un parmi l'organe de blocage et l'élément d'arrêt étant solidaire de la bague, et l'autre parmi l'organe de blocage et l'élément d'arrêt étant solidaire du couvercle ou de la cuve du boîtier ;
- les moyens élastiques sont constitués par un doigt élastique déformable radialement, qui s'étend axialement à partir du couvercle jusqu'à une extrémité libre comportant l'organe de blocage, l'organe d'actionnement étant un poussoir qui permet de faire fléchir le doigt élastique radialement vers l'intérieur pour l'amener à sa position de déblocage, et l'élément d'arrêt étant constitué par une découpe radiale du bord interne de la couronne de la bague, cette découpe radiale butant angulairement contre l'organe de blocage lorsque celui-ci est dans sa position de blocage ;
- le bord intérieur de la couronne de la bague de verrouillage comporte une échancrure qui s'étend angulairement entre deux encoches, ces deux encoches comprenant une première encoche dans laquelle s'engage l'organe de blocage lorsque la bague est dans sa position verrouillée, et une deuxième encoche dans laquelle s'engage l'organe de blocage lorsque la bague est dans sa position déverrouillée, la première encoche étant séparée du reste de l'échancrure par une première découpe radiale du bord interne de la couronne, cette première découpe radiale constituant l'élément d'arrêt qui collabore avec l'organe de blocage pour empêcher la rotation de la bague vers sa position déverrouillée, la deuxième encoche étant elle-même séparée du reste de l'échancrure par une deuxième découpe du bord interne de la couronne, l'organe de blocage faisant saillie radialement vers l'extérieur à partir de l'extrémité libre du doigt élastique et comportant une face qui est dirigée vers la couronne de la bague et qui comporte une surface de blocage et une surface de came, la surface de blocage s'étendant axialement et radialement et pouvant buter contre la première découpe lorsque la bague est dans sa position verrouillée, le doigt élastique étant suffisamment flexible pour permettre à ladite surface de blocage de passer au-dessus de la couronne lorsqu'on appuie sur le poussoir, et la surface de came étant une surface inclinée qui s'étend angulairement depuis la surface de blocage en s'éloignant du couvercle, la surface de came pouvant glisser sur la deuxième découpe en faisant fléchir suffisamment le doigt élastique pour passer au-dessus de la couronne lorsque la bague est déplacée depuis sa position déverrouillée jusqu'à sa position verrouillée ;
- la deuxième découpe est une découpe biaise formant un angle obtus avec la deuxième encoche ;
- la face de l'organe de blocage qui est dirigée vers la couronne comporte en outre deux méplats, qui encadrent la surface de blocage et la surface de came, l'un au moins desdits méplats recouvrant partiellement la couronne lorsque la bague est dans sa position verrouillée ou dans sa position déverrouillée, l'organe de blocage et le doigt élastique constituant ainsi l'un des crochets qui retiennent la bague de verrouillage sur le couvercle ;
- l'organe de blocage comporte au moins une mortaise et le poussoir est une pièce rapportée qui est montée en console sur l'organe de blocage et qui comporte au moins un tenon qui est emboîté à force dans ladite mortaise ;
- le poussoir comporte en outre une languette rigide qui est rabattue le long du doigt élastique ;
- l'organe de blocage fait partie des moyens d'indexation de la bague par rapport au couvercle.

D'autres caractéristiques et avantages de l'invention apparaîtront au cours de la description détaillée suivante de deux formes de réalisation de l'invention; données à titre d'exemples non limitatifs, en regard des dessins joints.

Sur les dessins :
- la figure 1 représente très schématiquement un boîtier de filtre à huile selon une forme de réalisation de la présente invention,
- la figure 2 est une vue de détail en coupe d'un boîtier similaire à celui de la figure 1,
- la figure 3 est une vue éclatée partielle, en perspective, du boîtier de la figure 2, le couvercle étant retourné pour montrer sa face supérieure,
- la figure 4 est une vue de dessous de la bague de verrouillage du boîtier de la figure 2,
- la figure 5 est une vue en perspective du couvercle d'un boîtier de filtre à huile selon une autre forme de réalisation de la présente invention,
- la figure 6 est une vue de dessous d'une bague de verrouillage utilisable avec le couvercle de la figure 5,
- la figure 7 est une vue éclatée en perspective représentant un des crochets qui permettent de monter la bague de verrouillage de la figure 6 sur le couvercle de la figure 5,
- la figure 8 est une vue de face du crochet de la figure 7, engagé dans une encoche du bord interne de la bague, et
- la figure 9 est une vue du dessus correspondant à la figure 8.

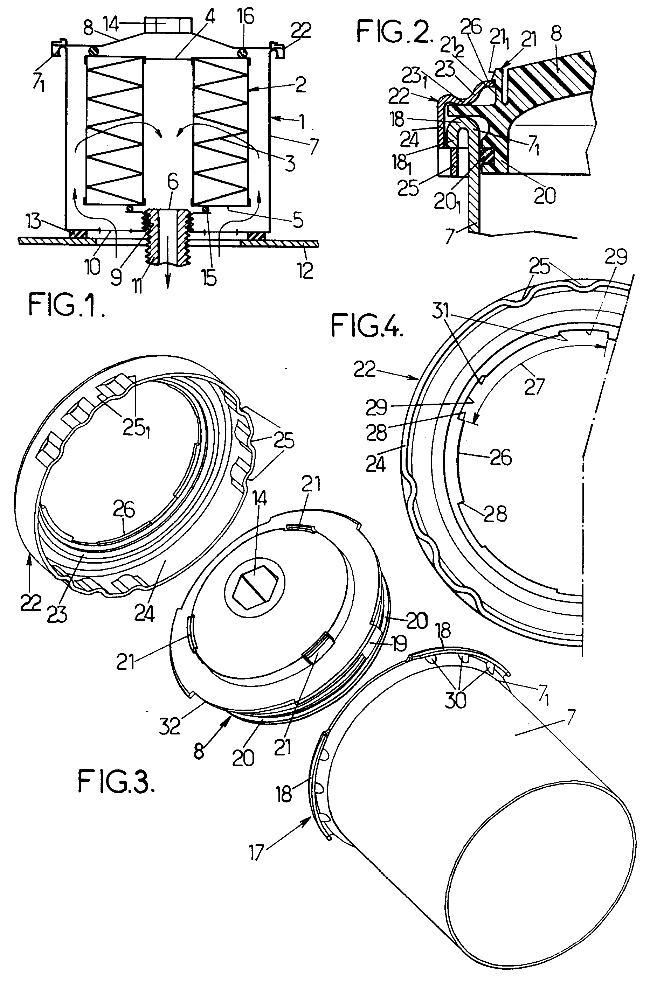

D'une façon générale, l'invention concerne un boîtier 1 (figure 1) destiné à recevoir de manière amovible des cartouches filtrantes 2 pour liquide, ces cartouches étant notamment destinées à filtrer l'huile de lubrification d'un moteur à combustion interne du véhicule.

Lesdites cartouches sont en général constituées par un élément filtrant cylindrique 3 en papier plissé délimité à ses deux extrémités par des flasques 4,5 dont l'un au moins est percé en son centre en 6.

Pour rendre possible et facile l'amovibilité des cartouches 2, on constitue le boîtier 1 par une cuve cylindrique 7 sur laquelle est monté un couvercle 8, le montage de ce couvercle étant prévu de façon telle qu'il puisse être très facilement dégagé de la cuve.

D'une façon connue en soi, le fond du boîtier 1 est évidé par un alésage fileté central 9 et par une couronne d'orifices 10 entourant cet alésage : ce dernier est destiné à coopérer par vissage avec un embout fileté extérieurement 11 compris par un support 12 tel qu'un carter de moteur de véhicule.

Le fond du boîtier peut être une pièce ou un ensemble distinct de la cuve 7 et fixé à celle-ci, comme c'est d'ailleurs le cas sur la figure 3, où la cuve 7 est réduite à une paroi cylindrique.

Le montage du boîtier 1 sur le support 12 se fait par vissage de l'alésage fileté 9 sur l'embout 11, ce vissage s'accompagnant de l'écrasement d'un joint d'étanchéité annulaire 13 entre le boîtier 1 et le support 12.

Ledit vissage est généralement obtenu en exerçant un couple sur le boîtier, à l'aide d'une clé appropriée, au niveau d'un bossage ou creux 14 à six pans prévu au milieu du couvercle 8.

On voit encore sur la figure 1 des joints d'étanchéité annulaires 15, 16 prévus entre les flasques de la cartouche filtrante 2 et des portées appropriées du boîtier.

Le trajet du liquide est représenté par des flèches : le liquide à filtrer est admis à travers les orifices 10, puis après filtration par traversée radiale centripète de l'élément filtrant 3, le liquide filtré est évacué axialement à travers l'embout fileté 11.

L'invention concerne ici plus spécialement le montage amovible du couvercle 8 sur la cuve 7.

Comme indiqué ci-dessus, on cherche ici à rendre ce couvercle facilement démontable à la main sans que soit remis en cause le montage vissé de la cuve 1 sur l'embout 11.

A cet effet :
- la cuve cylindrique 7 présente un bord libre 7₁, qui est prolongé vers l'extérieur par un rebord discontinu 17, ledit rebord comportant trois tronçons 18 répartis à 120 degrés les uns des autres;
- le couvercle 8 présente, du côté de la cuve 7, deux ergots 19 (dont un seul est représenté sur la figure 3) qui coopèrent angulairement avec les tronçons 18 du rebord de la cuve pour empêcher toute rotation du couvercle par rapport à la cuve, chaque ergot 19 étant placé en butée contre un tronçon 18 pour empêcher la rotation dans un sens angulaire,
- le couvercle 8 présente en outre, toujours du côté de la cuve 7, une paroi annulaire 20, qui comporte une gorge circulaire extérieure dans laquelle est logé un joint torique 20₁, lequel joint torique réalise un emboîtement étanche de la paroi annulaire 20 dans la cuve 7;
- le couvercle 8 comporte enfin, à l'opposé de la cuve 7, trois crochets 21, constitués chacun par un bec 21₁ dirigé radialement vers l'extérieur, ledit bec 21₁ étant relié au couvercle 8 par une patte élastique axiale 21₂, qui est déformable élastiquement radialement vers l'intérieur;
- le boîtier comporte en outre une bague de verrouillage 22, présentant une couronne 23 qui recouvre partiellement le couvercle 8, et une jupe 24 sensiblement cylindrique qui peut s'engager à l'extérieur du bord libre de la cuve 7, ladite jupe comportant trois groupes de trois crevés 25 qui saillent radialement vers l'intérieur, ces groupes étant répartis à 120 degrés les un des autres et adaptés à pénétrer axialement entre les tronçons 18 du rebord de la cuve, puis à s'engager sous ces tronçons par rotation de la bague 22 par rapport à la cuve 7, aux fins de verrouillage axial du couvercle sur la cuve;
- la couronne 23 de la bague de verrouillage comporte un bord interne 26 présentant trois échancrures 27 en arc de cercle, qui sont concentriques à la jupe et réparties à 120 degrés les unes des autres, chaque échancrure 27 recevant un crochet 21 du couvercle par clipsage, et chaque échancrure 27 s'étendant circonférentiellement entre deux butées 28 sensiblement radiales qui limitent le déplacement du crochet 21 dans l'échancrure, et donc qui limitent le déplacement angulaire de la bague par rapport au couvercle;
- chaque échancrure comporte en outre deux encoches 29 près de ces butées 28, pour recevoir, de façon réversible, le crochet 21 clipsé dans ladite échancrure, en définissant ainsi deux positions indexées de la bague 22 par rapport au couvercle 8, respectivement une position verrouillée et une position déverrouillée, la position angulaire déverrouillée de la bague par rapport au couvercle permettant la pénétration axiale simultanée des crevés 25 de la bague et de l'ergot 19 du couvercle entre les tronçons 18 du rebord de la cuve, et les crevés 25 de la bague étant engagés sous chaque tronçon 18 du rebord de la cuve dans la position angulaire verrouillée de la bague par rapport au couvercle.

La face supérieure des becs des crochets 21 est de préférence chanfreinée pour permettre le clipsage desdits crochets par un simple mouvement d'emboîtement axial de la bague 22 sur le couvercle 8.

Eventuellement, l'indexation de la position angulaire de la bague de verrouillage par rapport au couvercle pourrait être réalisée par d'autres moyens que les crochets 21 collaborant avec les encoches 29.

Dans la forme de réalisation représentée sur les dessins, les tronçons 18 du rebord de la cuve sont rigidifiés chacun par un rabat 18 qui s'étend axialement le long de la cuve 7, et par des poinçonnages 30 réalisés sur le bord libre 7₁ de la cuve.

En outre, toujours aux fins de rigidification, les crevés 25 forment chacun un redan qui est relié à la jupe 24 de la bague par deux lignes axiales 25₁.

Enfin, la rigidité de la bague 22 est renforcée par le fait que la couronne 23 de la bague présente une section en forme de S, bien visible sur la figure 2, qui est en appui sur le couvercle 8 par une zone de contact 23₁ annulaire, proche de la jupe 24.

Cette section en S de la couronne 23 permet aussi que le bord interne 26 de la couronne 23 soit rehaussé par rapport à la zone annulaire de contact 23₁, de sorte que les pattes 21₂ des crochets 21 ont une longueur axiale suffisante pour leur conférer une bonne élasticité.

De préférence, chaque encoche 29 de chaque échancrure 27 est séparée du reste de l'échancrure par une découpe biaise 31, qui a une action de came, pour favoriser le retrait élastique des crochets 21, radialement vers l'intérieur, lorsque ces crochets quittent les encoches 29, c'est-à-dire lorsque la bague 22 est tournée à partir d'une de ces positions indexées, verrouillée ou déverrouillée.

Enfin, le couvercle présente un bord périphérique 32 qui présente trois échancrures dans lesquelles pénètrent sans interférence les groupes de crevés 25 de la bague, lorsque la bague 22 est emboîtée sur le couvercle 8 en vue du clipsage des crochets 21 sur le bord interne 28 de la bague.

La manipulation du couvercle 8 avec la bague 22 est facilitée par les crevés 25, qui peuvent recevoir les doigts de la main d'un utilisateur lorsqu'il saisit la bague 22, ce qui permet une meilleure prise.

Dans les modes de réalisation préférés, la cuve 7 et la bague 22 sont métalliques, par exemple réalisées en acier inoxydable, et le couvercle 8 est en matière plastique, par exemple en polyamide 6-6 ou 4-6.

L'invention n'est pas limitée à la forme de réalisation particulière qui vient d'être décrite ; elle en embrasse, au contraire, toutes les variantes, notamment :
- celle dans laquelle le couvercle présente un seul ergot 19 coopérant avec deux tronçons 18 du rebord de la cuve pour empêcher la rotation du couvercle dans les deux sens angulaires,
- celles dans lesquelles le couvercle comporte plus de deux ergots 19,
- celles dans lesquelles le rebord de la cuve présente seulement deux tronçons 18, ou plus de trois tronçons 18,
- celles qui prévoient seulement deux groupes de bossages internes à l'intérieur de la jupe 24 de la bague de verrouillage, ou plus de deux groupes de bossages, chaque groupe de bossages pouvant éventuellement comprendre un seul bossage, et les bossages pouvant être autres que des crevés,
- celles dans lesquelles le couvercle comporte seulement deux crochets 21, ou plus de trois crochets 21,
- celles dans lesquelles le bord interne 26 de la bague comporte un nombre quelconque d'échancrures 27.

Dans la forme de réalisation qui vient d'être décrite, rien n'empêche un utilisateur de faire tourner la bague de verrouillage 22 de sa position verrouillée jusqu'à sa position déverrouillée lorsque le boîtier est monté sur le moteur.

Cela n'est pas gênant pour les boîtiers dans lesquels la cuve 7 reste normalement en permanence montée sur le moteur, et dans lesquels le changement du filtre s'effectue précisément en démontant le couvercle tandis que la cuve reste fixée sur le moteur.

Mais, il existe d'autres types de boîtiers de filtres, dans lesquels le couvercle 8 peut être orienté dans une direction quelconque, éventuellement vers le bas, et dans lesquels le changement de filtre s'effectue en dévissant la cuve 7 avec le couvercle 8 monté dessus, ce dévissage s'effectuant normalement au moyen du creux 14 à 6 pans.

Dans ces types de filtres, si un utilisateur non averti cherche à dévisser la cuve 7 manuellement en agissant sur la bague de verrouillage 22, il risque de faire passer la bague dans sa position déverrouillée et ainsi d'ouvrir le couvercle 8, ce qui peut provoquer l'écoulement de l'huile contenue dans le boîtier du filtre.

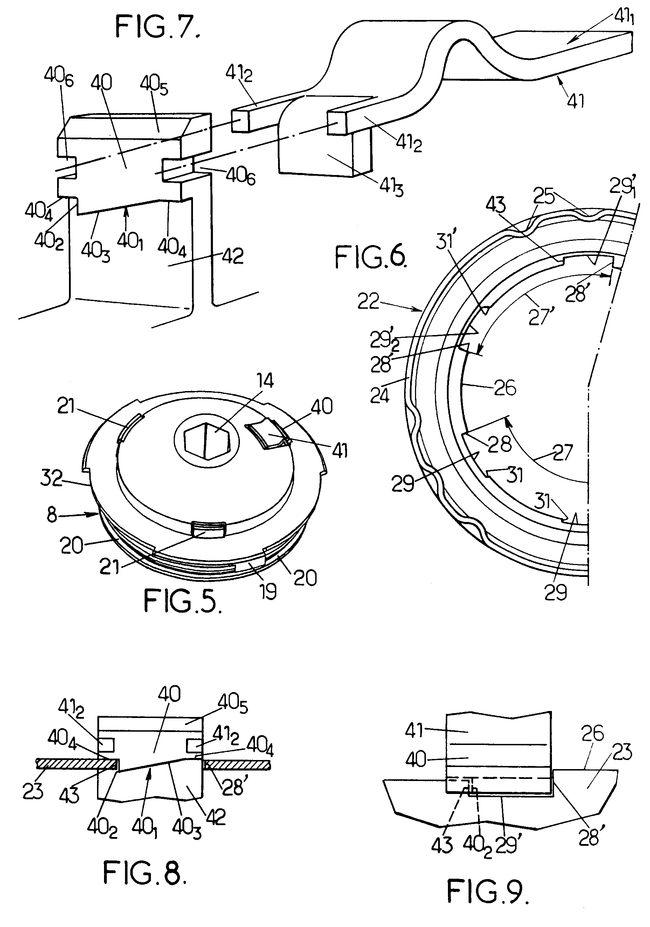

Afin d'éviter cet inconvénient, le couvercle 8 et la bague de verrouillage 22 peuvent être réalisés comme représenté sur les figures 5 à 9, les autres éléments du boîtier étant identiques à ceux décrits précédemment.

Le couvercle et la bague de verrouillage des figures 5 à 9 ne seront pas décrits en détail, puisqu'ils sont très similaire à ceux déjà décrits en regard des figures 1 à 4. Par conséquent, seuls les éléments différents de ceux déjà présentés ci-dessus seront décrits ici, les références déjà employées dans la description des figures 1 à 4 désignant ici des éléments identiques.

Dans la variante des figures 5 à 9, le couvercle 8 et la bague de verrouillage 22 comportent des moyens de blocage pour bloquer la bague de verrouillage dans sa position verrouillée, et des moyens de déblocage, actionnables par un utilisateur pour neutraliser temporairement l'action des moyens de blocage. Ces moyens de déblocage permettent ainsi le démontage volontaire du couvercle 8, par exemple après dévissage de la cuve 7, une fois que le boîtier se trouve sur un établi.

Dans ce but, le couvercle 8 comporte, en plus de deux crochets 21 tels que décrits précédemment, un crochet supplémentaire qui assure les fonctions de blocage et déblocage mentionnées ci-dessus. Ce crochet supplémentaire présente un doigt élastique 42 (figure 7), qui s'étend axialement à partir du couvercle 8, jusqu'à une extrémité libre. Cette extrémité libre comporte un organe de blocage 40 qui a la forme d'un bloc faisant saillie radialement vers l'extérieur.

L'organe de blocage comporte une face 40₁, dirigée vers la couronne 23 de la bague de verrouillage. Cette face 40₁ présente une surface de blocage 40₂ qui s'étend radialement et axialement, une surface de came 40₃ qui est inclinée par rapport à la couronne 23, et qui s'étend angulairement à partir de la surface de blocage 40₂ en s'éloignant axialement progressivement du couvercle 8, ces surfaces 40₂ et 40₃ étant encadrées par deux méplats 40₄ qui font face à la couronne 23.

L'organe de blocage 40 comporte en outre un chanfrein supérieur 40₅, qui permet de clipser le crochet comportant l'organe de blocage sur le bord interne de la couronne 23 par simple emboîtement axial de la bague de verrouillage 22 sur le couvercle 8.

Enfin, l'organe de blocage 40 comporte deux logements ou mortaises 40₆ orientés radialement, qui permettent de monter un poussoir 41 en console sur ledit organe de blocage.

Le poussoir 41 est réalisé en tôle métallique découpée et pliée, ou éventuellement en matière plastique. Il comporte une surface d'appui 41₁, accessible sur le dessus du couvercle 8, et deux tenons 41₂ qui s'engagent en emboîtement serré dans les deux mortaises 40₆ de l'organe de blocage.

De plus, pour rigidifier encore le montage du poussoir 41 sur l'organe de blocage, le poussoir 41 comporte en outre un rabat 41₃ qui s'étend axialement en direction du couvercle 8, et qui s'appuie contre le doigt élastique 42 sur une partie de la hauteur dudit doigt élastique.

Eventuellement, le poussoir 41 peut être moulé d'une seule pièce avec l'organe de blocage 40, le doigt élastique 42 et le couvercle 8, en matière plastique.

Comme représenté sur la figure 6, la bague de verrouillage 22 qui correspond au couvercle de la figure 5 présente, sur le bord interne 26 de sa couronne 23, une échancrure 27' spécialement adaptée à recevoir l'organe de blocage 40, en plus des deux échancrures 27 destinées à recevoir les crochets 21.

Cette échancrure 27' s'étend angulairement entre une première encoche 29'₁ et une deuxième encoche 29'₂. Les deux encoches 29'₁ et 29'₂ sont délimitées angulairement vers l'extérieur par deux butées 28', constituées chacune par une découpe radiale de la couronne 23. D'autre part, la première encoche 29' est délimité angulairement vers l'intérieur de l'échancrure 27' par une première découpe 43, qui s'étend radialement, tandis que la deuxième encoche 29'₂ est délimitée angulairement vers l'intérieur de l'échancrure 27' par une deuxième découpe 31', qui est dirigée en biais, en formant un angle obtus avec le fond de la deuxième encoche 29'₂.

Le doigt élastique 42 et l'organe de blocage 40 sont déplaçables dans l'échancrure 27' par rotation de la bague de verrouillage 22 par rapport au couvercle 8, les butées 28' coopérant avec le doigt élastique 42 pour limiter ce mouvement.

Lorsque la bague de verrouillage est dans sa position verrouillée, l'organe de blocage 40 est engagé dans la première encoche 29'₁ comme représenté sur les figures 8 et 9.

La surface de blocage 40₂ de l'organe de blocage est alors en butée contre la première découpe 43, et empêche un utilisateur de faire tourner involontairement la bague de verrouillage 22 depuis sa position verrouillée jusqu'à sa position déverrouillée, par exemple en cherchant à dévisser manuellement la cuve 7. Pour cela, l'organe de blocage 40 est dimensionné de façon à résister au couple qui peut être exercé manuellement par un utilisateur.

Par contre, si l'utilisateur veut réellement faire tourner la bague de verrouillage 22 depuis sa position verrouillée jusqu'à sa position déverrouillée pour ouvrir le couvercle 8, il appuie sur le poussoir 41 à l'aide d'un doigt en même temps qu'il commence à faire tourner la bague de verrouillage 22. De cette façon, le poussoir 41 fait fléchir radialement le doigt élastique 42 radialement vers l'intérieur, ce qui a pour effet de soulever la surface de blocage 40₂ qui se trouve ainsi au-dessus de la couronne 23 de la bague de verrouillage. Par conséquent, la surface de blocage 40₂ peut sans difficulté passer au-dessus de la première découpe 43, après quoi l'utilisateur peut relâcher le poussoir 41.

En effet, dans la suite du mouvement de rotation vers la position déverrouillée de la bague, l'extrémité inférieure de la surface de blocage 40₂ glisse contre la surface supérieure de la couronne 23, puis s'engage à nouveau, avec la surface de came 40₁, dans la deuxième encoche 29'₂ lorsque la bague de verrouillage arrive dans sa position déverrouillée.

Pour passer de la position déverrouillée à la position verrouillée, il n'est pas indispensable que l'utilisateur appuie sur le poussoir 41, puisqu'au cours de ce mouvement, la surface de came 40₃ glisse sur la deuxième découpe 31' en faisant fléchir progressivement le doigt élastique 42, jusqu'à ce que la totalité de la surface de came 40₃ et de la surface de blocage 40₂ soit passée au-dessus de la couronne 23.

Cet effet de came est encore facilité par le fait que la deuxième découpe 31' est biaise. Toutefois, le dispositif fonctionnerait aussi avec une deuxième découpe 31' dirigée radialement.

Dans les deux positions indexées de la bague de verrouillage, l'un au moins des méplats 40₄ de l'organe de blocage 40 recouvre partiellement la couronne 23, de sorte que l'organe de blocage 40 a aussi une fonction de maintien de la bague de verrouillage 22 sur le couvercle 8, comme les deux autres crochets 21.

Toutefois, l'organe de blocage 40 pourrait éventuellement ne pas avoir cette fonction d'accrochage, auquel cas les deux méplats 40₄ pourraient être supprimés. Dans ce cas, un troisième crochet 21 pourrait éventuellement être prévu.

On notera enfin que l'organe de blocage 40 constitue, avec les encoches 29'₁ et 29'₂, un moyen d'indexation de la position angulaire de la bague de verrouillage, de la même façon que les crochets 21 déjà décrits. Eventuellement, cette indexation pourrait être réalisée uniquement par l'organe de blocage 40, les autres crochets 21 coulissant simplement dans des échancrures 27 sans encoches 29, ou sur un bord intérieur 26 continu.

## Revendications

1. Boîtier pour cartouche filtrante (2) comprenant une cuve cylindrique (7) vissable sur un support (11), cette cuve cylindrique présentant un bord libre (7₁) qui peut recevoir un couvercle amovible (8), lequel présente un organe central (14) pour le vissage et/ou le dévissage de la cuve, caractérisé :
- en ce que le bord libre (7₁) est prolongé par un rebord discontinu (17) faisant saillie vers l'extérieur et comportant au moins deux tronçons (18),
- en ce que le couvercle (8) présente, du côté de la cuve (7), au moins un ergot (19) qui peut coopérer angulairement avec le rebord (17) de la cuve pour empêcher une rotation du couvercle par rapport à la cuve, et une paroi annulaire (20) qui peut s'emboîter avec étanchéité dans la cuve, le couvercle comportant en outre, à l'opposé de la cuve, au moins deux crochets (21,40) qui présentent des becs (21₁, 40₄) dirigés radialement vers l'extérieur et qui sont déplaçables élastiquement radialement vers l'intérieur,
- en ce que ledit boîtier comporte en outre une bague de verrouillage (22) présentant d'une part une couronne (23) qui recouvre partiellement le couvercle (8) et d'autre part une jupe (24) sensiblement cylindrique qui peut s'engager à l'extérieur du bord libre de la cuve (7), ladite jupe comportant des bossages internes (25) propres à pénétrer axialement entre les tronçons (18) du rebord de la cuve puis à s'engager sous ces tronçons par rotation de la bague par rapport à la cuve aux fins de verrouillage axial du couvercle sur la cuve,
- en ce que la couronne (23) de la bague comporte un bord interne (26) sur lequel sont clipsés les crochets (21, 40) du couvercle en permettant un déplacement angulaire de la bague par rapport au couvercle, les becs (21₁, 40₄) des crochets recouvrant localement la couronne (23) de la bague pour empêcher une séparation axiale de la bague et du couvercle,
- et en ce que ledit boîtier comporte des moyens d'indexation (21, 29 ; 40, 29'₁, 29'₂) qui définissent deux positions angulaires indexées de la bague (22) par rapport au couvercle (8), savoir une position verrouillée et une position déverrouillée, la position déverrouillée permettant la pénétration axiale simultanée des bossages internes (25) de la jupe de la bague et de l'ergot (19) du couvercle entre les tronçons (18) du rebord de la cuve, et les bossages internes (25) étant engagés sous les tronçons (18) du rebord de la cuve dans la position verrouillée, la bague et le couvercle étant maintenus de façon réversible par les moyens d'indexation dans leurs positions indexées.

2. Boîtier selon la revendication 1, dans lequel le bord interne (26) de la couronne de la bague présente au moins une échancrure (27) en arc de cercle, qui est concentrique à la jupe et dans laquelle est clipsé un des crochets (21), cette échancrure s'étendant circonférentiellement entre deux butées (28) sensiblement radiales qui coopèrent avec ledit crochet pour limiter le déplacement angulaire de la bague par rapport au couvercle, ladite échancrure comportant en outre deux encoches (29) près de ses butées (28) pour recevoir, de façon réversible, le crochet (21) clipsé dans ladite échancrure, en définissant ainsi les deux positions angulaires indexées de la bague (22) par rapport au couvercle (8).

3. Boîtier selon l'une quelconque des revendications 1 et 2, dans lequel le rebord discontinu (17) de ladite cuve présente un rabat (18₁) qui s'étend axialement le long de la cuve (7).

4. Boîtier selon l'une quelconque des revendications précédentes, dans lequel le rebord discontinu (17) est renforcé par des poinçonnages (30) réalisés sur le bord libre (7₁) de la cuve.

5. Boîtier selon l'une quelconque des revendications précédentes, dans lequel les bossages internes (25) de la jupe de la bague sont constitués par des crevés formant chacun un redan vers l'intérieur de la jupe.

6. Boîtier selon la revendication 5, dans laquelle la bague a un diamètre assez faible pour être tenue à la main, et les crevés (25) constituent des moyens de préhension propres à coopérer avec les doigts de la main pour faire tourner la bague (22) par rapport au couvercle (8).

7. Boîtier selon l'une quelconque des revendications précédentes, dans lequel la couronne (23) de la bague s'appuie sur le couvercle dans une zone annulaire (23₁) proche de la jupe (24).

8. Boîtier selon la revendication 7, dans lequel le bord interne (26) de la couronne de la bague est rehaussé par rapport à la zone annulaire de contact (23₁) entre la bague (22) et le couvercle (8), et les crochets (21) du couvercle s'étendent sensiblement axialement depuis le niveau de ladite zone annulaire de contact jusqu'au niveau dudit bord interne.

9. Boîtier selon l'une quelconque des revendications précédentes, dans lequel chaque encoche (29) de l'échancrure de la bague est séparée du reste de l'échancrure par une découpe biaise (31) formant un angle obtus avec ladite encoche (29).

10. Boîtier selon l'une quelconque des revendications précédentes, dans lequel le couvercle présente un bord périphérique (32) découpé de façon à ne pas interférer avec les bossages internes (25) de la jupe de la bague, lors de l'emboîtement axial de la bague (22) sur le couvercle (8).

11. Boîtier selon l'une quelconque des revendications précédentes, comportant en outre des moyens de blocage (40) pour bloquer la bague (22) dans sa position verrouillée, et des moyens de déblocage (41) actionnables pour neutraliser temporairement l'action des moyens de blocage.

12. Boîtier selon la revendication 11, dans lequel les moyens de blocage sont constitués par un organe de blocage (40) mobile entre une position de blocage et une position de déblocage, ledit organe de blocage étant sollicité par des moyens élastiques (42) vers sa position de blocage, les moyens de déblocage étant constitués par un organe d'actionnement (41) qui peut déplacer l'organe de blocage vers sa position de déblocage, contre l'action des moyens élastiques (42), le boîtier comportant en outre un élément d'arrêt (43) qui peut collaborer avec l'organe de blocage (40) pour bloquer la bague (22) dans sa position verrouillée, l'un parmi l'organe de blocage (40) et l'élément d'arrêt (43) étant solidaire de la bague (22), et l'autre parmi l'organe de blocage et l'élément d'arrêt étant solidaire du couvercle (8) ou de la cuve (7) du boîtier.

13. Boîtier selon la revendication 12, dans lequel les moyens élastiques (42) sont constitués par un doigt élastique déformable radialement, qui s'étend axialement à partir du couvercle (8) jusqu'à une extrémité libre comportant l'organe de blocage (40), l'organe d'actionnement (41) étant un poussoir qui permet de faire fléchir le doigt élastique (42) radialement vers l'intérieur pour l'amener à sa position de déblocage, et l'élément d'arrêt (43) étant constitué par une découpe radiale du bord interne (26) de la couronne (23) de la bague, cette découpe radiale butant angulairement contre l'organe de blocage (40) lorsque celui-ci est dans sa position de blocage.

14. Boîtier selon la revendication 13, dans lequel le bord intérieur (26) de la couronne de la bague comporte une échancrure (27') qui s'étend angulairement entre deux encoches (29'), ces deux encoches comprenant une première encoche dans laquelle s'engage l'organe de blocage lorsque la bague est dans sa position verrouillée, et une deuxième encoche dans laquelle s'engage l'organe de blocage lorsque la bague est dans sa position déverrouillée, la première encoche étant séparée du reste de l'échancrure (27') par une première découpe radiale (43) du bord interne (26) de la couronne, cette première découpe radiale constituant l'élément d'arrêt qui collabore avec l'organe de blocage (40) pour empêcher la rotation de la bague vers sa position déverouillée, la deuxième encoche étant elle-même séparée du reste de l'échancrure (27') par une deuxième découpe (31') du bord interne de la couronne, l'organe de blocage (40) faisant saillie radialement vers l'extérieur à partir de l'extrémité libre du doigt élastique (42) et comportant une face (40₁) qui est dirigée vers la couronne (23) de la bague et qui comporte une surface de blocage (40₂) et une surface de came (40₃), la surface de blocage s'étendant axialement et radialement et pouvant buter contre la première découpe (43) lorsque la bague est dans sa position verrouillée, le doigt élastique (42) étant suffisamment flexible pour permettre à ladite surface de blocage de passer au-dessus de la couronne (26) lorsqu'on appuie sur le poussoir (41), et la surface de came (40₃) étant une surface inclinée qui s'étend angulairement depuis la surface de blocage (40₂) en s'éloignant du couvercle (8), la surface de came pouvant glisser sur la deuxième découpe (31') en faisant fléchir suffisamment le doigt élastique (42) pour passer au-dessus de la couronne (26) lorsque la bague est déplacée depuis sa position déverrouillée jusqu'à sa position verrouillée.

15. Boîtier selon la revendication 14, dans lequel la deuxième découpe (31') est une découpe biaise formant un angle obtus avec la deuxième encoche (29').

16. Boîtier selon la revendication 14 ou la revendication 15, dans lequel la face (40₁) de l'organe de blocage qui est dirigée vers la couronne (26) comporte en outre deux méplats (40₄), qui encadrent la surface de blocage et la surface de came, l'un au moins desdits méplats recouvrant partiellement la couronne (26) lorsque la bague (22) est dans sa position verrouillée ou dans sa position déverrouillée, l'organe de blocage (40) et le doigt élastique (42) constituant ainsi l'un des crochets qui retiennent la bague (22) sur le couvercle (8).

17. Boîtier selon l'une quelconque des revendications 13 à 16, dans lequel l'organe de blocage (40) fait partie des moyens d'indexation de la bague par rapport au couvercle.

## Claims

1. Casing for filter cartridge (2), comprising a cylindrical trough (7) which may be screwed on to a support (11), said cylindrical trough having a free edge (7₁) which can receive a movable lid (8) which has a central member (14 ) for screwing the trough on or off, characterised in that :
- the free edge (7₁) is extended by a discontinuous shoulder (17) projecting outwards, and comprising at least two stubs (18);
- the lid (8) has, on the trough (7) side, at least one pin (19) which can co-operate angularly with the shoulder (17) of the trough in order to prevent rotation of the lid relative to the trough, and an annular partition (20) which can fit in a sealed manner in the trough, the lid also comprising, opposite the trough, at least two hooks (21, 40) which have noses (21₁, 40₁) oriented radially outwards, and resiliently movable towards the interior;
- the said casing also comprises a locking ring (22) having on the one hand a collar (23) which partially covers the lid (8) and on the other hand a substantially cylindrical skirt (24) which can engage on the exterior of the free edge of the trough (7), said skirt comprising internal bosses (25) adapted to penetrate axially between the stubs (18) of the shoulder of the trough, then to engage under said stubs by means of rotation of the ring relative to the trough, in order to provide axial locking of the lid on the trough;
- the collar (23) of the ring comprises an internal edge (26) upon which there are clip-fastened hooks (21, 40) of the lid, enabling angular displacement of the ring relative to the lid, the noses (21₁, 40₄) of the hooks locally covering the collar (23) of the ring in order to prevent axial separation of the ring and of the lid;
- said casing comprises indexing means (21, 29; 40, 29'₁, 29'₂), which define two indexed angular positions of the ring (22) relative to the lid (8), i.e. a locked position and an unlocked position, the unlocked position permitting simultaneous axial penetration of the internal bosses (25) of the skirt of the ring and of the pin (19) of the lid between the stubs (18) of the edge of the trough, and the internal bosses (25) being engaged beneath the stubs (18) of the edge of the trough in the locked position, the ring and the lid being retained in a reversible fashion in their indexed positions by indexing means.

2. Casing according to claim 1, in which the internal edge (26) of the collar of the ring has at least one fillet (27) in the shape of the arc of a circle, which is concentric with the skirt and in which there is clip-fastened one of the hooks (21), said fillet extending circumferentially between two substantially radial stops (28) which co-operate with said hook in order to limit the angular displacement of the ring relative to the lid, said fillet also comprising two notches (29) close to its stops (28) for receiving in a reversible manner the hook (21) clip-fastened in said fillet, thus defining the two angular indexed positions of the ring (22) relative to the lid (8).

3. Casing according to any one of claims 1 and 2, in which the discontinuous shoulder (17) of said trough has a flap (18₁) which extends axially along the trough (7).

4. Casing according to any one of the preceding claims, in which the discontinuous shoulder (17) is reinforced by punched indentation (30) provided on the free edge (7₁) of the trough.

5. Casing according to any one of the preceding claims, in which the internal bosses (25) of the skirt of the ring are constituted by clefts, each forming a graduation towards the interior of the skirt.

6. Casing according to claim 5, in which the ring has a diameter which is sufficiently small to be held in the hand, and the clefts (25) form grasping means appropriate to co-operate with the fingers of the hand in order to rotate the ring (22) relative to the lid (8).

7. Casing according to any one of the preceding claims, in which the collar (23) of the ring is supported on the lid in an annular zone (23₁) close to the skirt (24).

8. Casing according to claim 7, in which the internal edge (26) of the collar of the ring is raised relative to the annular contact zone (23₁) between the ring (22) and the lid (8), and the hooks (21) of the lid extend substantially axially from the level of the said annular contact zone to the level of said internal edge.

9. Casing according to any one of the preceding claims, in which each notch (29) of the fillet of the ring is separated from the rest of the fillet by a slanting slot (31) forming an obtuse angle with the said notch (29).

10. Casing according to any one of the preceding claims, in which the lid has a peripheral rim (32) made in such a way as not to interfere with the internal bosses (25) of the skirt of the ring during axial fitting of the ring (22) on the lid (8).

11. Casing according to any one of the preceding claims, further comprising blocking means (40) for blocking the ring (22) in its locked position, and unblocking means (41) which may be actuated in order temporarily to neutralise the action of the blocking means.

12. Casing according to claim 11, in which the blocking means are constituted by a blocking member (40) movable between a blocking position and an unblocking position, said blocking member being urged by resilient means (42) towards its blocked position, the unblocking means being constituted by an actuating member (41) which can shift the blocking member towards its unblocked position against the action of the resilient means (42), the casing further comprising a stop member (43) which can co-operate with the blocking member (40) in order to block the ring (22) in its locked position, one of either the blocking member (40) and the stop member (43) being integral with the ring (22), and the other of the blocking member and the stop member being integral with the lid (8) or with the trough (7) of the casing.

13. Casing according to claim 12, in which the resilient means (42) are constituted by a radially-deformable resilient finger which extends axially from the lid (8) to a free end comprising the blocking member (40), the actuating member (41) being a pusher which permits the resilient finger (42) to yield radially inwards, bringing it into its unblocking position, and the stop member (43) being constituted by a radial slot on the internal edge (26) of the collar (23) of the ring, said radial slot abutting angularly against the blocking member (40) when the latter is in its blocking position.

14. Casing according to claim 3, in which the internal edge (26) of the collar of the ring comprises a fillet (27') which extends angularly between two notches (29'), these two notches comprising a first notch in which a blocking member engages when the ring is in its locked position, and a second notch in which the blocking member engages when the ring is in its unlocked position, the first notch being separated from the rest of the fillet (27') by a first radial slot (43) of the internal edge (26) of the collar, this first radial slot constituting the stop member which co-operates with the blocking member (40) in order to prevent rotation of the ring towards its unlocked position, the second slot being itself separated from the rest of the fillet (27') by a second slot (31') of the internal edge of the collar, the blocking member (40) projecting radially outwards from the free end of the resilient finger (42) and comprising a face (40₁) which is oriented towards the skirt (23) of the ring, and which comprises a blocking surface (40₂) and a cam surface (40₃), the blocking surface extending axially and radially, and being capable of abutting against the first slot (43) when the ring is in its locked position, the resilient finger (42) being sufficiently flexible to enable the said blocking surface to pass above the skirt (26) when the pusher (41) is pressed, and the cam surface (40₃) being an inclined surface which extends angularly from the blocking surface (40₂), away from the lid (8), the cam surface being capable of sliding on the second slot (31'), causing the resilient finger (42) to yield sufficiently to pass above the skirt (26) when the ring is displaced from its unlocked position to its locked position.

15. Casing according to claim 14, in which the second slot (31') is a slanting slot forming an obtuse angle with the second slot (29').

16. Casing according to claim 14 or claim 15, in which the face (40₁) of the blocking member, which is oriented towards the collar (26), further comprises two flattened portions (40₄) which frame the blocking surface and the cam surface, one at least of said flattened portions partially covering the collar (26) when the ring (22) is in its locked position or in its unlocked position, the blocking member (40) and the resilient finger (42) thus constituting one of the hooks which retain the ring (22) on the lid (8).

17. Casing according to any one of claims 13 to 16, in which the blocking member (40) forms part of the indexing means of the ring relative to the lid.

## Patentansprüche

1. Behälter für Filterpatronen (2), der aus einem zylindrischen Topf (7) besteht, der auf eine Unterlage (11) aufschraubbar ist und einen freien Rand (7₁) aufweist, der einen abnehmbaren Deckel (8) aufnehmen kann, wobei der Deckel mit einem mittleren Organ (14) zum Aufschrauben und/oder Abschrauben des Behälters versehen ist, dadurch gekennzeichnet,
- daß der freie Rand (7₁) durch eine unterbrochene Randleiste (17) verlängert ist, die nach außen vorspringt und aus wenigstens zwei Abschnitten (18) besteht,
- daß der Deckel (8) auf der Seite des Topfes (7) wenigstens einen Vorsprung (19), der winklig mit der Randleiste (17) des Topfes zusammenwirken kann, um eine Drehung des Deckels gegenüber dem Topf zu verhindern, und eine ringförmige Wandung (20) aufweist, die sich dicht in den Trog einschieben läßt, wobei der Deckel darüber hinaus auf der dem Trog entgegengesetzten Seite wenigstens zwei Haken (21, 40) enthält, die mit Nasen (21₁, 40₁) versehen sind, die radial nach außen gerichtet und elastisch in radialer Richtung nach innen verschiebbar sind,
- daß der Behälter ferner einen Verriegelungsring (22) enthält, der einerseits aus einem Kranz (23), der den Deckel (8) teilweise abdeckt, und andererseits einem im wesentlichen zylindrischen Mantel (24) besteht, der sich an die Außenseite des freien Randes des Troges (7) anlegen kann, wobei der Mantel Einbuchtungen (25) aufweist, die sich axial zwischen die Abschnitte (18) der Randleiste des Troges einschieben und dann unter den Abschnitten durch Drehen des Ringes in bezug auf den Trog zum Zwecke der axialen Verriegelung des Deckels an dem Trog eingreifen können,
- daß der Kranz (23) des Ringes einen inneren Rand (26) enthält, an dem die Haken (21, 40) des Deckels eingehakt sind, wobei sie eine Winkelverschiebung des Ringes in bezug auf den Deckel ermöglichen und die Nasen (21₁, 40₁) der Haken örtlich den Kranz (23) des Ringes abdecken, um eine axiale Trennung des Ringes von dem Deckel zu verhindern,
- und daß der Behälter Indexierungsmittel (21, 29; 40, 29'₁, 29'₂) enthält, die zwei indexierte Winkelstellungen des Ringes (22) in bezug auf den Deckel (8) festlegen, nämlich eine Verriegelungsstellung und eine entriegelte Stellung, wobei die entriegelte Stellung das gleichzeitige axiale Einschieben der Einbuchtungen (25) des Mantels des Ringes und des Vorsprunges (19) des Deckels zwischen den Abschnitten (18) der Randleiste des Troges ermöglicht und in der Verriegelungsstellung die Einbuchtungen (25) unter den Abschnitten (18) der Randleiste des Troges erfaßt sind, wobei der Ring und der Deckel reversibel durch die Indexierungsmittel in ihren indexierten Stellungen gehalten werden.

2. Behälter nach Anspruch 1, bei dem der innere Rand (26) des Kranzes des Ringes wenigstens eine kreisbogenförmige Ausnehmung (27) aufweist, die konzentrisch zu dem Mantel verläuft und in der einer der Haken (21) eingehakt ist, wobei sich die kreisbogenförmige Ausnehmung umfangsmäßig zwischen zwei Anschlägen (28) erstreckt, die im wesentlichen radial verlaufen und mit dem Haken zusammenwirken, um die Winkelverschiebung des Ringes in bezug auf den Deckel zu begrenzen und wobei die bogenförmige Ausnehmung darüber hinaus zwei Ausschnitte (29) in der Nähe seiner Anschläge (28) enthält, um reversibel den in der Ausnehmung eingehakten Haken aufzunehmen, wobei auf diese Weise die beiden indexierten Winkelstellungen des Ringes (22) zu dem Deckel (8) festgelegt werden.

3. Behälter nach einem der vorhergehenden Ansprüche 1 und 2, bei dem der unterbrochene Randabschnitt (17) des Troges ein umgelegter Rand (18₁) ist, der sich axial längs des Troges (7) erstreckt.

4. Behälter nach einem der vorhergehenden Ansprüche, bei dem der unterbrochene Rand (17) durch Perforierungen (30) im freien Rand (7₁) des Troges verstärkt ist.

5. Behälter nach einem der vorhergehenden Ansprüche, bei dem die Einbuchtungen (25) des Mantels des Ringes aus Vertiefungen bestehen, die einen zum Inneren gerichteten Vorsprung des Mantels bilden.

6. Behälter nach Anspruch 5, bei dem der Ring einen so geringen Durchmesser hat, daß er mit der Hand ergriffen werden kann, und die Einbuchtungen (25) Greifmittel bilden, die mit den Fingern der Hand zusammenwirken können, um den Ring (22) in bezug auf den Deckel (18) zu drehen.

7. Behälter nach einem der vorhergehenden Ansprüche, bei dem der Kranz (23) des Ringes sich an dem Deckel in einem ringförmigen Bereich (23₁) in der Nähe des Mantels (24) abstützt.

8. Behälter nach Anspruch 7, bei dem der innere Rand (26) des Kranzes des Ringes in bezug auf den ringförmigen Bereich (23₁) zwischen dem Ring (22) und dem Deckel (8) höher liegt und die Haken (21) des Deckels sich im wesentlichen axial von der Höhe des ringförmigen Bereiches aus bis zur Höhe des inneren Randes erstrecken.

9. Behälter nach einem der vorhergehenden Ansprüche, bei dem jeder Ausschnitt (29) der Ausnehmung des Ringes von dem Rest der Ausnehmung durch eine Schneidkante (31) getrennt ist, die einen stumpfen Winkel mit dem Ausschnitt (29) bildet.

10. Behälter nach einem der vorhergehenden Ansprüche, bei dem der Deckel einen umlaufenden Rand (32) aufweist, der so abgeschnitten ist, daß er sich nicht mit den Einbuchtungen (25) des Mantels des Ringes überschneidet, wenn der Ring (22) axial auf den Deckel (8) aufgesetzt wird.

11. Behälter nach einem der vorhergehenden Ansprüche, der darüber hinaus Einrichtungen (40) zum Blockieren des Ringes (22) in der verriegelten Stellung und Einrichtungen (41) enthält, mit denen die Wirkung der Blockiermittel zeitweise aufhebbar ist.

12. Behälter nach Anspruch 11, bei dem die Blockiereinrichtungen aus einem zwischen einer Verriegelungsstellung und einer entriegelten Stellung beweglichen Verriegelungsorgan (40), das durch elastische Mittel (42) in die Verriegelungsstellung gedrückt wird, und die Entriegelungseinrichtungen aus einem Betätigungsorgan (41) bestehen, das das Verriegelungsorgan entgegen der Wirkung des elastischen Mittels (42) in die entriegelte Stellung verschieben kann, wobei der Behälter darüber hinaus ein Arretierelement (43) enthält, das mit dem Verriegelungsorgan (40) zusammenwirken kann, um den Ring (22) in seiner verriegelten Stellung zu blockieren, wobei eins der beiden aus dem Verriegelungsorgan (40) und dem Arretierelement (43) bestehenden Elemente mit dem Ring (22) und das andere der beiden Elemente mit dem Deckel (8) oder dem Topf (7) des Behälters verbunden ist.

13. Behälter nach Anspruch 12, bei dem die elastischen Mittel (42) aus einem in radialer Richtung elastisch deformierbaren Finger bestehen, der sich in axialer Richtung ausgehend vom Deckel (8) bis zu einem freien, das Verriegelungsorgan (40) enthaltenden Ende erstreckt, wobei das Betätigungsorgan (41) ein Mitnehmer ist, mit dem der elastische Finger (42) in radialer Richtung nach innen biegbar ist, um ihn in die Entriegelungsstellung zu bringen, und das Arretierelement (43) aus einem radialen Ausschnitt der inneren Kante (26) des Kranzes (23) des Ringes besteht, wobei der ausgeschnittene radiale Abschnitt winklig gegen das Verriegelungsorgan (40) anstößt, wenn dieses in der Verriegelungsstellung ist.

14. Behälter nach Anspruch 13, bei dem der innere Rand (26) des Kranzes des Ringes mit einer Ausnehmung (27') versehen ist, die sich winklig zwischen zwei Ausschnitten (29') erstreckt, wobei die beiden Ausschnitte aus einem ersten Ausschnitt, in den das Verriegelungsorgan eingreift, wenn der Ring in der verriegelten Stellung ist, und einem zweiten Ausschnitt bestehen, in den das Verriegelungsorgan eingreift, wenn der Ring in seiner entriegelten Stellung ist, und der erste Ausschnitt von dem Rest der Ausnehmung (27') durch eine erste radiale Schneidkante (43) des inneren Randes (26) des Kranzes getrennt ist, wobei die erste radiale Schneidkante das Arretierelement bildet, das mit dem Verriegelungsorgan (40) zusammenwirkt, um die Drehung des Ringes in seine entriegelte Stellung zu verhindern, und der zweite Ausschnitt seinerseits von dem Rest der Ausnehmung (27') durch eine zweite Schneidkante (31') des inneren Randes des Kranzes getrennt ist, wobei das Verriegelungsorgan (40) ausgehend von dem freien Ende des elastischen Fingers (42) in radialer Richtung nach außen vorsteht und eine Fläche (40₁) enthält, die in Richtung des Kranzes (23) des Ringes verläuft und die eine Blockierfläche (40₂) und eine Nockenfläche (40₃) enthält, wobei die Blockierfläche sich axial und radial erstreckt und gegen die erste Schneidkante (43) anschlagen kann, wenn der Ring in der verriegelten Stellung ist, und der elastische Finger (42) ausreichend flexibel ist, damit die Blockierfläche sich oberhalb des Randes (26) verschieben kann, wenn man den Mitnehmer (41) betätigt, und die Nockenfläche (40₃) eine geneigt verlaufende Fläche ist, die sich winklig von der Blockierfläche (40₂) aus erstreckt und sich von dem Deckel (8) entfernt, wobei die Nockenfläche auf der zweiten Schneidkante (31') gleiten kann, indem sie den elastischen Finger (42) ausreichend biegt, um über den Rand (26) hinauszutreten, wenn der Ring aus seiner Entriegelungsstellung bis in seine Verriegelungsstellung verschoben wird.

15. Behälter nach Anspruch 1, bei dem die zweite Schneidkante (31') ein schräger Schnitt ist, der einen stumpfen Winkel mit dem zweiten Ausschnitt (29') bildet.

16. Behälter nach Anspruch 14 oder Anspruch 15, bei dem die Oberfläche (40₁) des Verriegelungsorgans, die in Richtung des Randes (26) des Kranzes gerichtet ist, darüber hinaus zwei Anflachungen (40₄) enthält, die die Blockierfläche und die Nockenfläche einrahmen, wobei wenigstens eine der Anflachungen teilweise den Rand (26) bedeckt, wenn der Ring (42) in seiner verriegelten Stellung oder in seiner entriegelten Stellung ist und wobei das Verriegelungsorgan (40) und der elastische Finger (42) dann einen der Haken bilden, die den Ring (22) an dem Deckel (8) zurückhalten.

17. Behälter nach einem der vorhergehenden Ansprüche 13 bis 16, bei dem das Verriegelungsorgan (40) Teil der Indexierungsmittel für die Stellung des Ringes in bezug auf den Deckel ist.
